# EUROPÄISCHE PATENTANMELDUNG

(11) **EP 1 154 245 A1**
(43) Veröffentlichungstag der Anmeldung: **14.11.2001**
(21) Anmeldenummer: 00810394.7
(22) Anmeldetag: 08.05.2000
(51) Int. Cl.: G01F 23/20

(54) **Füllstandsanzeigevorrichtung für Behälter**

(71) Anmelder: Merlin Design GmbH, 3012 Bern (CH)
(72) Erfinder: Iseli, Martin, 3012 Bern (CH)
(74) Vertreter: BOVARD AG - Patentanwälte

(57) **Zusammenfassung**

Eine Füllstandsanzeigevorrichtung für Behälter (3), insbesondere für Behälter, die Flüssiggas enthalten, weist mindestens einen aus einem elastischen Material bestehenden, balgförmigen Druckkörper (1) auf. Dieser Druckkörper ist mit einem flüssigen Medium (15) gefüllt, und an eine Rohrleitung angeschlossen. Der Druckkörper (1) wird zwischen einer Auflagefläche (2) des Behälters (3) und dem Boden angeordnet, so dass das Gewicht des Behälters (3) den Druckkörper (1) um ein bestimmtes Mass zusammendrückt und das flüssige Medium (15) in die Rohrleitung verdrängt. Dadurch wird der Pegel (23) des flüssigen Mediums (15) in der Rohrleitung (11) verändert, diese Veränderung kann als Messgrösse zum Feststellen des Füllstandes des Behälters verwendet werden.

## Beschreibung

Die vorliegende Erfindung bezieht sich auf eine Füllstandsanzeigevorrichtung für Behälter, insbesondere für Behälter, die Flüssiggas enthalten, gemäss dem Oberbegriff des Patentanspruchs 1.

Insbesondere bei Behältern, die Flüssiggas enthalten, kann der Füllstand mit geringem Aufwand nur über die Änderungen des Gewichts des Inhaltes festgestellt werden. Vor allem bei Behältern mit Flüssiggas, die für Campingzwecke eingesetzt werden, ist es zweckmässig, den Füllstand des Behälters in einfacher Weise feststellen zu können.

Füllstandsanzeigevorrichtungen der genannten Gattung sind bekannt. In der DE-A-41 20 186 ist beispielsweise eine derartige Vorrichtung beschrieben, die aus zwei Platten besteht, wovon die eine auf der andern federnd abgestützt ist. Auf die eine Platte wird der Behälter aufgesetzt, die andere ist am Boden abgestützt. Zwischen den beiden Platten ist eine Zylinder-Kolbenanordnung eingesetzt, die mit einem flüssigen Medium gefüllt ist und an die eine Rohrleitung und ein Steigrohr angeschlossen sind. Durch das Gewicht des Behälters wird der Kolben in den Zylinder gedrückt, die Flüssigkeit in diesem Raum wird verdrängt und weicht in das Steigrohr aus. Durch den Pegel kann in Zusammenwirkung mit einer geeigneten Messskala der Füllstand des Behälters festgestellt werden.

Diese Vorrichtung weist den Nachteil auf, dass der Aufbau relativ aufwendig ist und die Herstellung relativ teuer wird.

Die Aufgabe der vorliegenden Erfindung besteht nun darin, eine Füllstandsanzeigevorrichtung für Behälter, insbesondere für Behälter, die Flüssiggas enthalten, zu schaffen, welche sehr einfach aufgebaut ist und die günstig ist in der Herstellung, wobei auch das Anbringen am Behälter vereinfacht wird.

Erfindungsgemäss erfolgt die Lösung dieser Aufgabe durch die im Patentanspruch 1 aufgeführten Merkmale.

Durch die Verwendung eines aus einem elastischen Material bestehenden Druckkörpers ist es nicht erforderlich, den Behälter auf einer einen komplizierten Aufbau aufweisenden Abstützeinrichtung zu lagern. Der Druckkörper kann in einfachster Weise lediglich zwischen den Boden, auf welchen der Behälter gestellt wird und der Behälterunterseite eingesetzt werden. Dabei kann sich beispielsweise der Behälter einseitig auf dem Boden abstützen, die andere Seite liegt auf dem Druckkörper auf, welcher durch das Gewicht des Behälters mit Inhalt in entsprechendem Masse zusammengedrückt wird, wodurch das flüssige Medium in die Rohrleitung und den Messbereich verdrängt wird.

In vorteilhafter Weise umfasst der balgförmige Druckkörper eine im wesentlichen ebene Standfläche, während die gegen den Behälter gerichtete Oberfläche kalottenförmig ausgestaltet ist. Dadurch wird ein sicherer Stand des Behälters erreicht.

Eine weitere vorteilhafte Ausgestaltung der Erfindung besteht darin, dass an der kalottenförmigen Oberfläche des Druckkörpers vorspringende Stege angeformt sind. Dadurch kann der Druckkörper derart unter dem Behälter angeordnet werden, dass der üblicherweise vorstehende Rand des Behälters abgestützt wird, wobei der eine der beiden Stege auf der inneren Seite des Randes und der andere der Stege auf der äusseren Seite des Randes verläuft. Dadurch wird ein mögliches Verschieben des Druckkörpers bezüglich des Behälters vermieden.

In vorteilhafter Weise ist die Rohrleitung, die an den Druckkörper angeschlossen ist, am der Auslassöffnung abgewandten Ende verschlossen, wobei zwischen dem Pegel des flüssigen Mediums und dem verschlossenen Ende ein Luftpolster vorhanden ist. Dadurch wird das Einnehmen der Ausgangsform des Druckkörpers, wenn dieser nicht mehr durch den Behälter belastet wird, unterstützt.

Eine weitere vorteilhafte Ausgestaltung der Erfindung besteht darin, dass der Bereich der Rohrleitung, der dem der Auslassöffnung abgewandten Ende benachbart ist, in einer Halterung gehalten ist, an welcher Markierungen angebracht sind, die jeweils einen bestimmten Füllgrad des Behälters entsprechen. Mit den an der Halterung angebrachten Markierungen lässt sich in einfacher Weise ablesen, ob der Behälter voll oder leer ist.

In vorteilhafter Weise ist die Rohrleitung aus einem flexiblen Schlauch gebildet, welcher mindestens im Bereich der Halterung transparent ist. Durch das Verwenden eines flexiblen Schlauchs kann die Halterung irgendwo an einem geeigneten Ort angebracht werden, sei dies in unmittelbarer Nähe des Behälters oder mit einem Abstand davon.

Die Halterung ist in vorteilhafter Weise aus einem stabförmigen Element gebildet, welches einen Längsschlitz aufweist, in welchen der Endbereich der Rohrleitung eingelegt und klemmend gehalten werden kann. Die Halterung kann mit Haltemitteln in Form eines Magneten oder eines Klebbands versehen sein, wodurch die Befestigung der Halterung an einem geeigneten Ort in einfacher Weise möglich wird.

Eine weitere vorteilhafte Ausgestaltung der Erfindung besteht darin, dass drei Druckkörper über den Umfang verteilt unter dem Behälter eingesetzt werden können, die über Rohre miteinander verbunden sind und eine Verbindung zur Rohrleitung haben. Dadurch wird ein optimaler Stand des Behälters auf diesen drei Druckkörpern erreicht, die Anzeige des Füllstandes des Behälters wird trotzdem gewährleistet.

In vorteilhafte Weise sind die Markierungen entlang der Rohrleitung verschiebbar und einstellbar, wodurch sich die Füllstandsanzeigevorrichtung durch den jeweiligen Anwender praktisch auf beliebige Behälter mit unterschiedlichen Gewichten selbst einstellen lässt.

Ausführungsformen der vorliegenden Erfindung werden nachfolgend anhand der beiliegenden Zeichnung beispielhaft näher erläutert.

Es zeigt
Fig. 1 eine erfindungsgemässe Füllstandsanzeigevorrichtung mit einem Druckkörper, der Rohrleitung und dem Messbereich, im Schnitt dargestellt;
Fig. 2 eine Draufsicht auf die erfindungsgemässe Füllstandsanzeigevorrichtung gemäss Fig. 1;
Fig. 3 eine Seitenansicht auf die Halterung;
Fig. 4 ein Beispiel einer Anordnung eines Druckkörpers unter dem Behälter, zum Teil im Schnitt;
Fig. 5 in schematischer Darstellung die Anordnung des Druckkörpers unter dem Behälter gemäss Fig. 4;
Fig. 6 die Ansicht einer weiteren Möglichkeit einer Anordnung des Druckkörpers unter dem Behälter; und
Fig. 7 eine Ansicht, bei welcher drei Druckkörper unter dem Behälter angeordnet sind.

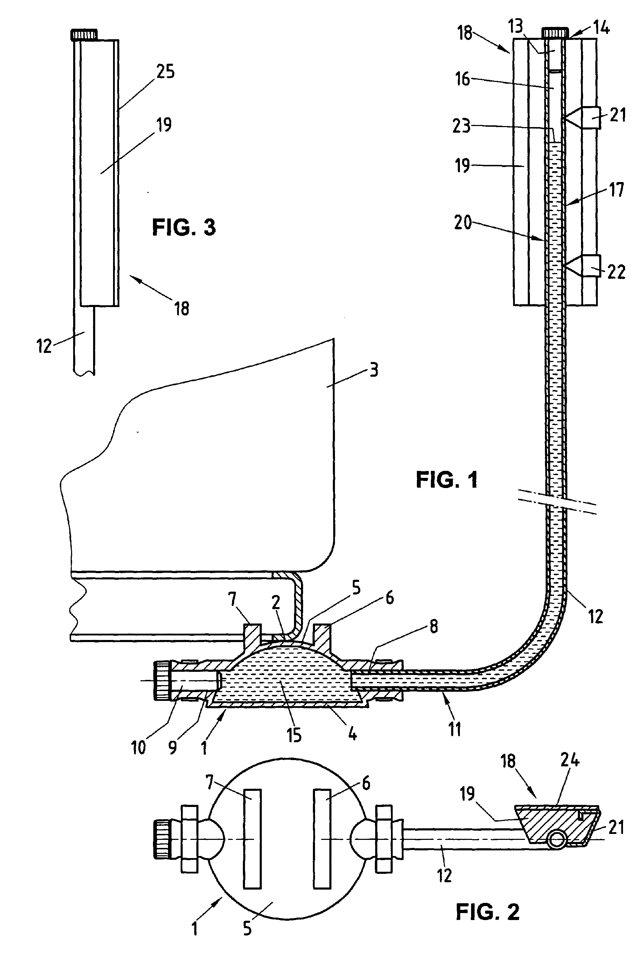

Wie aus den Fig. 1, 2 und 3 ersichtlich ist, umfasst die erfindungsgemässe Füllstandsanzeigevorrichtung einen Druckkörper 1, der zwischen eine Auflagefläche 2 des Behälters 3, die als umlaufender Rand ausgebildet ist, und dem Boden eingesetzt ist. Der Behälter 3 enthält beispielsweise Flüssiggas, wobei je nach Füllstand dieses Behälters 3 das Gewicht grösser oder kleiner ist, und der Druck auf den Druckkörper 1 ebenfalls entsprechend grösser oder kleiner ist.

Der Druckkörper 1, der aus einem elastischen Material, beispielsweise Gummi, besteht, ist balgförmig ausgebildet und verfügt über eine im wesentlichen ebene Standfläche 4. Die gegen den Behälter gerichtete Oberfläche 5 ist kalottenförmig ausgestaltet. An der kalottenförmigen Oberfläche 5 des Druckkörpers 1 sind zwei vorspringende Stege 6 und 7 angeformt. Der Druckkörper 1 wird so unter den Behälter 3 gestellt, dass der Steg 6 ausserhalb und der Steg 7 innerhalb des die Auflagefläche 2 bildenden Randes zu stehen kommt. Dadurch kann der Druckkörper 1 bezüglich des Behälters 3 mindestens in radialer Richtung nicht verschoben werden.

Der Druckkörper 1 weist im vorliegenden Ausführungsbeispiel zwei Auslassöffnungen 8 und 9 auf. Die Auslassöffnung 9 ist durch einen Bolzen 10 verschlossen. An die Auslassöffnung 8 ist eine Rohrleitung 11 angeschlossen.

Diese Rohrleitung 11 ist aus einem flexiblen Schlauch 12 gebildet, der transparent ist. Das der Auslassöffnung 8 abgewandte Ende 14 des Schlauches 12 ist ebenfalls durch einen Bolzen 13 verschlossen.

Der Hohlraum des Druckkörpers 1 und der Rohrleitung 11 ist mit einem flüssigen Medium 15 gefüllt, das beispielsweise aus Wasser bestehen kann, welchem ein Frostschutzmittel beigemischt ist. Dieses flüssige Medium 15 kann auch gefärbt werden. Die Rohrleitung 11 ist soweit gefüllt, dass an dessen Ende 14 ein Luftpolster 16 eingeschlossen ist.

Der Bereich 17 der Rohrleitung 11, der dem der Auslassöffnung 8 abgewandten Ende 14 benachbart ist, ist in einer Halterung 18 gehalten. Die Halterung 18 besteht aus einem stabförmigen Element 19, das mit einem längs des stabförmigen Elementes 19 verlaufenden Längsschlitz 20 ausgestattet ist. In den Längsschlitz 20 ist der Bereich 17 der Rohrleitung 11 eingelegt und klemmend gehalten. Entlang des stabförmigen Elementes 19 ist eine obere Markierung 21 und eine untere Markierung 22 verschiebbar angebracht.

Wenn das Gewicht des vollen Behälters 3 auf den Druckkörper 1 wirkt, wird dieser zusammengedrückt, das flüssige Medium 15 steigt in der Rohrleitung 11 an, das Luftpolster 16 wird zusammengepresst. Die obere Markierung 21 kann nun in die Position geschoben werden, dass sie mit dem Pegel 23 des flüssigen Mediums 15 übereinstimmt. Wenn der Behälter 3 leer ist, der Druck auf den Druckkörper 1 somit nachlässt, dieser wegen des elastischen Materials sich gegen die ursprüngliche Form zurückverformt, was unter Mithilfe des Luftpolsters 16 geschieht, sinkt der Pegel 23 des flüssigen Mediums 15 auf einen Stand, der dem leeren Behälter 3 entspricht, die Markierung 22 kann dann in diese Position verschoben werden. Somit hat man eine Anzeige über den Füllstand des Behälters 3, die für einen nächsten gleichen Behälter 3 einjustiert ist. Wenn ein anderer Behälter verwendet wird, kann die Einjustierung entsprechend neu gemacht werden.

Durch die Verwendung eines flexiblen Schlauches 12 kann die Halterung 18 irgendwo bezüglich des Behälters 3, beispielsweise an einer geeigneten Wand eines Raums befestigt werden. Zur Befestigung kann am stabförmigen Element 19 auf dessen Rückseite beispielsweise ein Magnet 24 oder ein Klebband 25 angebracht sein.

Diese Füllstandsanzeigevorrichtung kann beispielsweise auch als Bausatz vertrieben werden, die Einzelteile können problemlos durch den Anwender zusammengesetzt werden. Der Schlauch 12 kann dann auf die gewünschte Länge zugeschnitten werden, er kann beispielsweise bei einem Campinganhänger vom Raum, in welchem der Gasbehälter aufbewahrt wird, in den Innenraum des Campingwagens verlegt werden und an geeigneter Stelle mit der daran angebrachten Halterung 18 befestigt werden.

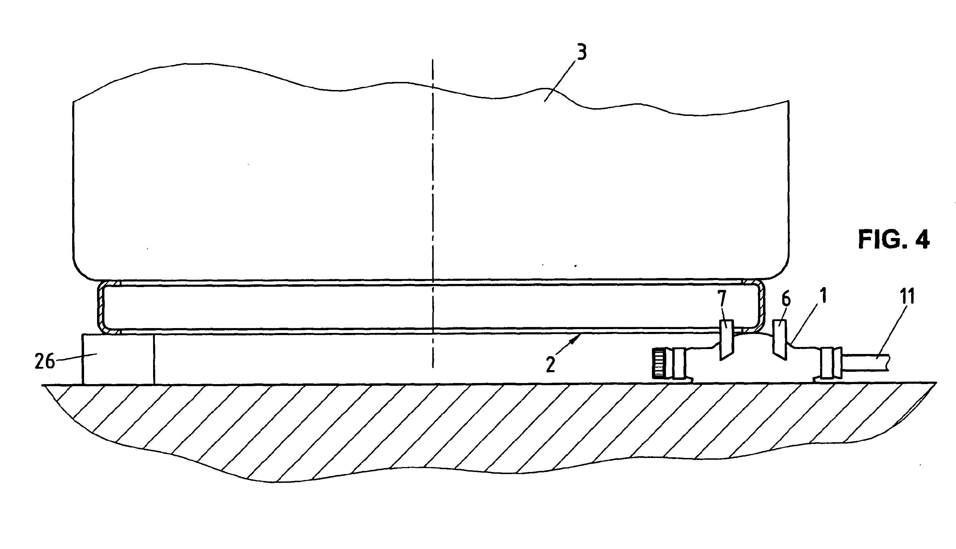

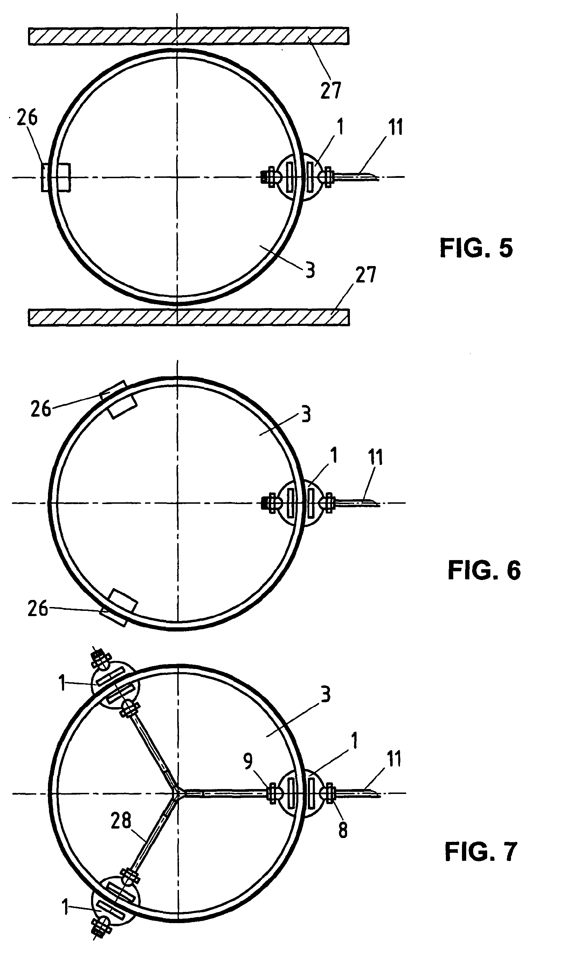

Wie aus Fig. 4 ersichtlich ist, wird ein Druckkörper 1, wie er vorgängig beschrieben worden ist, unter einen Behälter 3 gelegt. Um nun eine Schieflage dieses Behälters 3 zu vermeiden, kann gegenüberliegend eine Zwischenlage 26 angebracht werden. Wie aus Fig. 5 ersichtlich ist, können, wenn ein Druckkörper 1 und eine Zwischenlage 26, die gegenüberliegend dem Druckkörper 1 angeordnet ist, verwendet werden, seitliche Führungswände 27 angebracht werden, wodurch der Behälter 3 in einer beispielsweise senkrechten Lage gehalten wird.

Anstelle dieser seitlichen Führungswände 27 können beispielsweise auch zwei Zwischenlagen 26 vorgesehen werden, die voneinander beabstandet unter den Behälter eingesetzt werden, wodurch zusammen mit dem Druckkörper 1 praktisch eine Dreipunktauflage für den Behälter 3 erreicht wird, was einen stabilen Stand für den Behälter 3 ergibt, und wobei die Anzeige trotzdem optimal funktioniert.

Es wäre auch denkbar, wie in Fig. 7 dargestellt ist, drei Druckkörper 1 einzusetzen, die ebenfalls über den Umfang des Behälters 3 verteilt angeordnet sind und wiederum eine Dreipunktauflage bilden, wobei diese drei Druckkörper 1 über Rohre 28 miteinander verbunden werden, und von einem Druckkörper 1 aus die Rohrleitung 11 weggeführt wird. Bei diesem letztgenannten Druckkörper 1 sind somit beide Auslassöffnungen 8 und 9 in Gebrauch. Auch hier wird eine entsprechende Anzeige des Füllstandes in der Rohrleitung erhalten.

Die vorliegend beschriebene Erfindung eignet sich nicht nur, wie in diesem Ausführungsbeispiel beschrieben wurde, für eine Füllstandsanzeige eines Behälters, in welchem Flüssiggas aufbewahrt wird, sie ist für jegliche Art von Behältern mit vorzugsweise flüssigem Inhalt anwendbar.

Es ist auch denkbar, diese Erfindung für jegliche Art von Körpern, die während eines Vorgangs das Gewicht verändern, einzusetzen, um die Gewichtsveränderung feststellen zu können. Die Änderung des Gewichts kann durch die Veränderung des Pegelstandes festgestellt werden. Dieser kann zum Beispiel anhand einer Skala ermittelt werden, wobei diese Skala geeicht werden kann, damit die Gewichtsänderung als Absolutwert abgelesen werden kann.

## Patentansprüche

1. Füllstandsanzeigevorrichtung für Behälter (3), insbesondere für Behälter, die Flüssiggas enthalten, welche einen mit einem flüssigen Medium (15) gefüllten Hohlkörper umfasst, in welchem das flüssige Medium (15) durch das Gewicht des Behälters (3) über eine Rohrleitung (11) verdrängbar ist und in einem Messbereich der Rohrleitung (11) eine Veränderung des Pegels (23) zur Folge hat, welcher Messbereich mit einer Skala versehen ist, und der Pegel des flüssigen Mediums (15) den Füllstand des Behälters (3) anzeigt, **dadurch gekennzeichnet, dass** der Hohlkörper mindestens einen balgförmigen, aus einem elastischen Material bestehenden Druckkörper (1) aufweist, der zwischen eine Auflagefläche (2) des Behälters (3) und den Boden, auf den der Behälter (3) gestellt ist, einsetzbar ist, derart, dass der Behälter (3) mindestens teilweise auf dem Druckkörper (1) abgestützt ist.

2. Füllstandsanzeigevorrichtung nach Anspruch 1, **dadurch gekennzeichnet, dass** der balgförmige Druckkörper (1) eine im wesentlichen ebene Standfläche (4) aufweist, und die gegen den Behälter (3) gerichtete Oberfläche (5) im wesentlichen kalottenförmig ausgestaltet ist.

3. Füllstandsanzeigevorrichtung nach Anspruch 2, **dadurch gekennzeichnet, dass** an der kalottenförmigen Oberfläche (5) des Druckkörpers (1) vorspringende Stege (6, 7) angeformt sind.

4. Füllstandsanzeigevorrichtung nach einem der Ansprüche 1 bis 3, **dadurch gekennzeichnet, dass** der Druckkörper (1) mindestens eine Auslassöffnung (8; 9) aufweist, an welche die Rohrleitung (11) angeschlossen ist, die am der Auslassöffnung (8; 9) abgewandten Ende (14) verschlossen ist, und dass zwischen dem Pegel (23) des flüssigen Mediums (15) und dem verschlossenen Ende (14) ein Luftpolster (16) vorhanden ist.

5. Füllstandsanzeigevorrichtung nach Anspruch 4, **dadurch gekennzeichnet, dass** der Bereich (17) der Rohrleitung (11), der dem der Auslassöffnung (8; 9) abgewandten Ende (14) benachbart ist, in einer Halterung (18) gehalten ist, an welcher Markierungen (21, 22) angebracht sind, die jeweils einem bestimmten Füllgrad des Behälters (3) entsprechen.

6. Füllstandsanzeigevorrichtung nach Anspruch 5, **dadurch gekennzeichnet, dass** die Rohrleitung (11) aus einem flexiblen Schlauch (12) gebildet ist, welcher mindestens im Bereich (17) der Halterung (18) transparent ist.

7. Füllstandsanzeigevorrichtung nach Anspruch 5 oder 6, **dadurch gekennzeichnet, dass** die Halterung (18) aus mindestens einem stabförmigen Element (19) gebildet ist, in welchem ein längs des stabörmigen Elements (19) verlaufender Längsschlitz (20) angebracht ist, in welchen der Bereich (17) der Rohrleitung (11) eingelegt und klemmend gehalten ist, und dass an der Halterung (18) Haltemittel (24; 25) angebracht sind, mit welchen die Halterung (18) an einem geeigneten Ort befestigbar ist.

8. Füllstandsanzeigevorrichtung nach Anspruch 6, **dadurch gekennzeichnet, dass** die Haltemittel aus einem Magneten (24) oder aus einem Klebband (25) gebildet sind.

9. Füllstandsanzeigevorrichtung nach einem der Ansprüche 1 bis 8, **dadurch gekennzeichnet, dass** drei Druckkörper (1) vorgesehen sind, welche miteinander und mit der Rohrleitung (11) über Rohre (28) verbunden sind.

10. Füllstandsanzeigevorrichtung nach einem der Ansprüche 5 bis 9, **dadurch gekennzeichnet, dass** die Markierungen (21, 22) entlang der Rohrleitung (11) verschiebbar und einstellbar sind.
